# EUROPÄISCHE PATENTSCHRIFT

(11) **EP 4 405 628 B1**
(45) Veröffentlichungstag und Bekanntmachung des Hinweises auf die Patenterteilung: **22.07.2026**
(21) Anmeldenummer: 23820850.8
(22) Anmeldetag: 07.12.2023
(51) Int. Cl.: C04B 7/42, F27B 1/00, F27D 19/00, C04B 7/45, C04B 7/12, F27B 15/08, C04B 7/43, C04B 7/36, F27B 15/18, F27D 15/02, F27B 19/04, F27B 15/09, F27B 15/02, F27B 15/10, F27B 15/16

(54) **VORRICHTUNG ZUR FARBOPTIMIERUNG AKTIVIERTER TONE**
DEVICE FOR COLOUR OPTIMISATION OF ACTIVATED CLAYS
DISPOSITIF D'OPTIMISATION DES COULEURS D'ARGILES ACTIVÉES

(30) Priorität: 14.12.2022 DE 102022133349; 14.12.2022 LU 103050
(43) Veröffentlichungstag der Anmeldung: 31.07.2024
(73) Patentinhaber: thyssenkrupp Polysius GmbH, 59269 Beckum (DE); thyssenkrupp AG, 45143 Essen (DE)
(72) Erfinder: FIT, Leo, 48155 Münster (DE); PRIESEMANN, Christina, 26689 Apen (DE); BERGER, Claudia, 08393 Schönberg (DE)
(74) Vertreter: thyssenkrupp Intellectual Property GmbH
(86) Internationale Anmeldenummer: PCT/EP2023/084637
(87) Internationale Veröffentlichungsnummer: WO 2024/126237

(56) Entgegenhaltungen:
- WO-A1-02/064526
- DE-A1- 102020 211 750
- US-A1- 2014 000 491

## Beschreibung

Die Erfindung betrifft eine Vorrichtung und ein Verfahren zur Farboptimierung von aktivierten Tonen.

Die Zementindustrie ist ein großer Kohlendioxid-Emittent. Ein wichtiger Punkt ist das aus dem Kalkstein freigesetzte Kohlendioxid. Um die Kohlendioxid-Emissionen zu senken, wird auf Klinkerersatzstoffe zurückgegriffen, welche bei der Aktivierung vorzugsweise eben kein Kohlendioxid freisetzen. Ein wichtiges Produkt sind daher aktivierte Tone. Ein Problem bei Tonen ist jedoch, dass diese oftmals beispielsweise Eisen enthalten, welches bei einer Aktivierung unter oxidierenden Bedingungen üblicherweise (wenigstens teilweise) aufoxidiert wird und als Fe^{III} stark rot farbgebend ist. Dieses wird jedoch vom Kunden üblicherweise nicht akzeptiert. Um eine zement- oder klinkerähnliche Farbe zu erhalten, welche vom Kunden akzeptiert wird, wird der aktivierte Ton oftmals unter reduzierenden Bedingungen behandelt, um das aufoxidierte Eisen wieder zu reduzieren und somit den aktivierten Ton eine zementähnliche Farbe zu geben.

Aus der DE 10 2016 104 738 A1 ist ein Verfahren und eine Vorrichtung zur thermischen Behandlung von körnigen Feststoffen bekannt.

Aus der DE 10 2008 020 600 B4 ist ein Verfahren und eine Anlage zur Wärmebehandlung feinkörniger mineralischer Feststoffe bekannt.

Aus der DE 10 2011 014 498 A1 ist ein Klinkerersatzstoff bekannt.

Aus der US 2012 / 160 135 A1 ist ein Verfahren zur Herstellung synthetischer Puzzolane bekannt.

Aus der WO 2021 / 224 055 A1 ist eine Farboptimierung bei der Herstellung aktivierter Tone bekannt.

Aus der US 2014 / 0000491 A1 ist ein Klinkerersatzstoff auf Basis eines calcinierten Tones bekannt.

Aus der DE 10 2020 211 750 A1 ist die Energierückgewinnung bei der Kühlung farboptimierter aktivierter Tone bekannt.

Aus der US 4 573 908 A ist ein Verfahren und eine Vorrichtung zur Herstellung von weißen Zementklinker bekannt.

Bei der Farboptimierung ergeben sich jedoch zwei Problemstellungen. Zum einen ist eine längere Verweilzeit der bereits aktivierten Tone bei hoher Temperatur schlecht, da es zu einer Deaktivierung kommen kann. Dieser Effekt ist zusätzlich von der Partikelgröße abhängig. Bei kleineren Partikeln tritt die Deaktivierung schneller ein. Zum anderen ist aber die Reduktion und damit die Farboptimierung ebenfalls von der Partikelgröße abhängig. Je kleiner die Partikel sind, umso schneller geht die Entfärbung, je größer die Partikel sind, desto länger wird für die Reduktion benötigt. Dieses führt nun dazu, dass ein Optimum gefunden werden muss, bei dem die kleinsten Partikel nicht deaktiviert werden und die größten Partikel noch entfärbt werden. Dieses Optimum wird dadurch erreicht, dass man eine möglichst schmale Partikelgrößenverteilung wählt, also den Unterschied zwischen dem kleinsten Partikel und dem größten Partikel gering hält. Dieses wiederum ist aufwändig und energieintensiv, was wiederum eine neue potentielle Kohlendioxidquelle schafft, da regenerative Energie für die Prozesse zur Herstellung eines engen Kornbandes nur begrenzt verfügbar ist.

Aufgabe der Erfindung ist es, eine Vorrichtung und ein Verfahren bereitzustellen, bei dem die Farboptimierung auch mit einer deutlich breiteren Partikelgrößenverteilung möglich ist.

Gelöst wird diese Aufgabe durch Vorrichtung mit den in Anspruch 1 angegebenen Merkmalen. Vorteilhafte Weiterbildungen ergeben sich aus den Unteransprüchen, der nachfolgenden Beschreibung sowie den Zeichnungen.

Die erfindungsgemäße Vorrichtung dient zur thermischen Aktivierung von mineralischen Materialien, insbesondere Tonen. Die Vorrichtung weist einen Calcinator, eine Reduktionsvorrichtung und einen Materialkühler auf. Der Calcinator und die Reduktionsvorrichtung sind zur Überführung von calciniertem Material über eine erste Verbindung miteinander verbunden. Die Reduktionsvorrichtung ist mit dem Materialkühler über wenigstens eine zweite Verbindung zur Überführung von farboptimierten Material verbunden. Erfindungsgemäß ist die Reduktionsvorrichtung ein Wirbelschichtreaktor. Dieser Wirbelschichtreaktor oder Wirbelbettreaktor hat sich als Reduktionsvorrichtung als extrem vorteilhaft erweisen, wenn eine breite Partikelgrößenverteilung vorliegt (ein breites Kornband). Zum einen werden extrem kleine Partikel sehr schnell mit dem Fluidisierungsgas ausgetragen. Zum anderen hat die Partikelgröße auch einen Einfluss auf die Transportgeschwindigkeit im Wirbelschichtreaktor. Dadurch ermöglicht der Wirbelschichtreaktor die Farboptimierung in einfacher Weise, da kleine Partikel, welche schnell farboptimiert sind, auch schneller ausgetragen werden, wohingegen große Partikel, welche eine längere Behandlungszeit benötigen, auch eine längere Verweilzeit aufweisen. Somit ist es möglich, deutlich Energie bei der Zerkleinerung und bei der Fraktionierung der Partikelgrößenverteilung einzusparen.

Zusätzlich kann beispielsweise vor dem Calcinator ein Vorwärmer angeordnet sein. Hierdurch kann die mit dem Gasstrom aus dem Calcinator ausgetragene Wärme auf das thermisch zu aktivierende Material übertragen werden.

Erfindungsgemäß weist die Reduktionsvorrichtung einen ersten Materialausgang und einen zweiten Materialausgang auf. Insbesondere sind der erste Materialausgang und der zweite Materialausgang auf unterschiedlichen Höhen angeordnet. Beispielsweise kann der erste Materialausgang an der Unterseite der Wirbelschicht angeordnet sein. Dadurch wird durch den ersten Materialausgang eine Grobfraktion des farboptimierten Materials ausgetragen. Beispielsweise kann der zweite Materialaustrag an der Oberseite der Wirbelschicht angeordnet sein. Dadurch wird durch den zweiten Materialausgang eine Feinfraktion des farboptimierten Materials ausgetragen. So kann neben der gezielten Farboptimierung auch gleich eine Trennung nach Größe erfolgen. Die beiden Fraktionen können anschließend getrennt oder vereint weiterverarbeitet werden.

Erfindungsgemäß weist die Reduktionsvorrichtung einen Gasauslass auf. Der Gasauslass ist mit einer Gasabreinigungsvorrichtung, beispielsweise und bevorzugt einer Filtervorrichtung, über eine vierte Verbindung verbunden. In der Gasabreinigungsvorrichtung wird die feinste Fraktion des aktivierten und farboptimierten Materials abgeschieden. Diese Fraktion ist üblicherweise zugleich die aktivste Fraktion. Diese kann entweder mit dem weiteren aktivierten und farboptimierten Material wieder vereinigt werden. Diese feinste Fraktion kann aber auch getrennt weiterverarbeitet werden, beispielsweise für besonders anspruchsvolle Anwendungen.

Erfindungsgemäß weist die Gasabreinigungsvorrichtung einen Feststoffauslass auf. Der Materialkühler weist wenigstens einen ersten Kühlmaterialeinlass, einen zweiten Kühlmaterialeinlass, einen Kühlmaterialauslass, einen Kühlgaseinlass und einen Kühlgasauslass auf. Der erste Kühlmaterialeinlass ist strömungstechnisch näher am Kühlgaseinlass als der zweite Kühlmaterialeinlass angeordnet. Der Feststoffauslass ist mit dem ersten Kühlmaterialeinlass über eine dritte Verbindung zur Überführung des in der Gasabreinigungsvorrichtung abgeschiedenen Materials verbunden. Der erste Materialausgang und/oder der zweite Materialausgang ist mit dem zweiten Kühlmaterialeinlass über die zweite Verbindung zur Überführung von farboptimierten Material verbunden.

Dadurch kommt das feine aus der Gasabreinigungsvorrichtung stammende Material mit dem kühleren Kühlgas in Kontakt, sodass hier eine schnelle Abkühlung erfolgt. Dieses ist vorteilhaft, da die Feinfraktion aus der Gasabreinigungsvorrichtung am ehesten einer Reoxidation unterliegen kann und daher bevorzugt besonders schnell abgekühlt werden sollte.

Die beiden Fraktionen aus der Reduktionsvorrichtung können entweder zunächst vereint und dann gemeinsam dem Materialkühler durch den zweiten Kühlmaterialeinlass zugeführt werden oder aber getrennt durch getrennte Kühlmaterialeinlässe. Es besteht auch die Möglichkeit, das Material, das aus dem Materialbett der Wirbelschicht ausgetragen wird (Mittelfraktion), mit dem Feingut aus dem Gasabreinigungsvorrichtung vor Eintritt in den Kühler zusammenzufügen.

In einer weiteren Ausführungsform der Erfindung weist der Materialkühler einen dritten Kühlmaterialeinlass auf. Der erste Kühlmaterialeinlass ist strömungstechnisch näher am Kühlgaseinlass als der dritte Kühlmaterialeinlass angeordnet. Der zweite Materialausgang ist mit dem dritten Kühlmaterialeinlass über eine fünfte Verbindung zur Überführung von farboptimierten Material verbunden. Dadurch können die Mittelfraktion und die Grobfraktion getrennt zugeführt werden, wobei der dritte Kühlmaterialeinlass bevorzugt zwischen dem ersten Kühlmaterialeinlass und dem zweiten Kühlmaterialeinlass angeordnet ist.

In einer weiteren Ausführungsform der Erfindung sind der erste Materialausgang und der zweite Materialausgang jeweils mit dem zweiten Kühlmaterialeinlass des Materialkühlers zur Überführung von farboptimierten Material miteinander verbunden.- Weiter ist der Feststoffauslass der Gasabreinigungsvorrichtung mit dem ersten Kühlmaterialeinlass des Materialkühlers verbunden. Alternativ werden der erste Materialstrom aus dem ersten Materialausgang und der zweite Materialstrom aus dem zweiten Materialausgang an unterschiedlichen Stellen in den Materialkühler eingebracht. Hierdurch kann auch eine angepasste Kühlung erfolgen, insbesondere, wenn der erste Materialstrom und der zweite Materialstrom eine unterschiedliche Partikelgrößenverteilung aufweisen.

In einer weiteren Ausführungsform der Erfindung weist die Vorrichtung eine Desagglomerationsvorrichtung auf. Die Desagglomerationsvorrichtung ist mit dem Calcinator zur Überführung von desagglomeriertem Material verbunden. Bevorzugt ist die Desagglomerationsvorrichtung mit dem Calcinator über einen Vorwärmer verbunden. Beispielsweise und bevorzugt ist die Desagglomerationsvorrichtung über einen Steigrohrtrockner mit dem Calcinator zur Überführung von desagglomeriertem Material verbunden. Zwischen dem Steigrohrtrockner und dem Calcinator ist bevorzugt wenigstens ein Vorwärmer angeordnet. Weiter bevorzugt ist die Desagglomerationsvorrichtung eine Hammermühle, Vertikalrollenmühle, Prallmühle, Pendelrollenmühle oder Rührwerksmühle. Besonders bevorzugt ist die Desagglomerationsvorrichtung eine Hammermühle.

In einer weiteren Ausführungsform der Erfindung weist die Vorrichtung eine Farberfassungsvorrichtung auf. Die Farberfassungsvorrichtung ist zur Erfassung der Farbe des Produkts ausgebildet. Die Farberfassungsvorrichtung ist in oder entlang des Produktstromes nach dem Materialkühler angeordnet. Durch die Erfassung der Farbe kann eine Reduktion und damit eine Farboptimierung im notwendigen Maße durchgeführt werden, aber auch auf das notwendige Maß beschränkt werden, wodurch Reduktionsmittel eingespart werden kann.

In einer weiteren Ausführungsform der Erfindung weist die Vorrichtung eine Reduktionsmittelzuführung auf. Die Reduktionsmittelzuführung ist mit der Reduktionsvorrichtung zur Zuführung von Reduktionsmittel verbunden. Als Reduktionsmittel können verschiedene gasförmige, flüssige oder feste Stoffe eingesetzt werden. Typische gasförmige Reduktionsmittel sind Methan, Wasserstoff oder Kohlenmonoxid. Beispiele für flüssige Reduktionsmittel sind flüssige Kohlenwasserstoffe. Ein wichtiges Beispiel für ein festes Reduktionsmittel ist Kohle, insbesondere Kohlenstaub oder Biomasse. Ist das Reduktionsmittel ein Brennstoff, so erfolgt üblicherweise eine Verbrennung bei einem Unterschuss an Sauerstoff, sodass eine reduzierende Atmosphäre entsteht, beispielsweise und insbesondere Kohlenmonoxid. Die Vorrichtung weist weiter eine Steuervorrichtung auf. Die Steuervorrichtung ist zur Regelung der durch die Reduktionsmittelzuführung zugeführten Menge an Reduktionsmittel ausgebildet. Dazu ist die Steuervorrichtung in entsprechender Weise zur Übertragung von Steuerbefehlen oder durch das direkte Ansteuern von zum Beispiel Stellmotoren mit der Reduktionsmittelzuführung verbunden. Die Steuervorrichtung ist weiter zur Regelung der Menge an Reduktionsmittel in Abhängigkeit von der Farberfassungsvorrichtung erfassten Farbe ausgebildet. Dazu weist die Steuervorrichtung insbesondere eine Datenverbindung zur Farberfassungsvorrichtung auf, um die von der Farberfassungsvorrichtung erfasste Farbe des Produktes zu erhalten. Weiter weist die Steuervorrichtung beispielsweise einen Farbschwellenwert auf. Wird der Farbschwellenwert überschritten, ist die Probe also beispielsweise zu rötlich, so wird die Zufuhr an Reduktionsmittel erhöht, um eine stärkere Entfärbung zu erreichen. Wird der Farbschwellwert unterschritten, so wird die Zufuhr an Reduktionsmittel reduziert, um einen unnötigen Verbrauch dessen zu vermeiden. Beispielsweise kann der Farbschwellenwert auch in Form eines Bereichs vorgegeben sein. Alternativ kann die Steuerungsvorrichtung eine Zuordnungstabelle aufweisen, in welcher die Menge an Reduktionsmittel für verschiedene Farbwertbereiche vorgegeben ist. Insgesamt kann somit die minimale Menge an Reduktionsmittel verwendet werden, die benötigt wird, um eine ausreichende Entfärbung und damit Marktakzeptanz zu erreichen.

Es kann vorgesehen sein, dass sowohl ein Reduktionsmittel als auch ein Brennmittel vorgesehen sind. Beispielsweise wird als Brennmittel Biomasse verwendet, wobei beispielsweise eine ungefähr stöchiometrische Verbrennung erfolgt. Dadurch ist nach der Verbrennung der Restsauerstoffgehalt üblicherweise gering. Anschließend wird beispielsweise Wasserstoff als Reduktionsmittel zugegeben. Dieser weist als kleines Molekül hervorragende Diffusionseigenschaften auf, wäre als Brennstoff aber teurer als die Biomasse.

**In** einer weiteren Ausführungsform der Erfindung ist zwischen der Reduktionsvorrichtung und dem Materialkühler eine gasabschließende Materialschleuse angeordnet.

**In** einer weiteren Ausführungsform der Erfindung ist zwischen dem Calcinator und der Reduktionsvorrichtung eine gasabschließende Materialschleuse angeordnet.

**In** einer weiteren Ausführungsform der Erfindung weist die Vorrichtung eine Gaszuführung zur Reduktionsvorrichtung auf. Die Gaszuführung ist bezüglich Volumenstrom und Gasgeschwindigkeit regelbar. Die Vorrichtung weist eine Steuervorrichtung auf. Die Vorrichtung weist weiter eine Partikelgrößenvorgabevorrichtung auf. Die Partikelgrößenvorgabevorrichtung kann beispielsweise dadurch ausgebildet sein, dass von einer Partikelgrößenmessvorrichtung die Partikelgrößenverteilung ermittelt und an die Partikelgrößenvorgabevorrichtung übergeben wird. Alternativ kann die Partikelgrößenvorgabevorrichtung eine Eingabevorrichtung im herkömmlichen Sinne sein, bei der ein Bediener die Partikelgrößenverteilung entweder direkt oder über eine Auswahl aus vorgegebenen Verteilungen eingibt. Ebenso kann die Partikelgrößenvorgabevorrichtung als Schnittstelle zu einem zentralen Datenbanksystem sein, welches beispielsweise Daten aus der Laboranalytik oder zu zugelieferten Produkten aufweist und so die Partikelgrößenverteilung beispielsweise aufgrund des zugelieferten Materials übergeben kann. Ebenso kann vorgesehen sein, dass die Partikelgröße an wenigstens zwei unterschiedlichen Positionen erfasst wird, beispielsweise an einem Steigrohrtrockner und vor dem Wirbelschichtreaktor. Beide Informationen werden zusammen mit der Positionsangabe der Erfassung über die Partikelgrößenvorgabevorrichtung an die Steuervorrichtung übergeben. Die Steuervorrichtung ist zur Ansteuerung der Gaszuführung in der Art ausgebildet, dass die Steuervorrichtung Volumenstrom und Gasgeschwindigkeit in Abhängigkeit der durch die Partikelgrößenvorgabevorrichtung vorgegebene Partikelgröße des Materials steuert. Die Partikelgrößenverteilung hat einen Einfluss auf die Lockerungsgeschwindigkeit (Lockerungspunkt), also den Punkt, an dem der Gasstrom den Feststoff gerade zu fluidisieren beginnt. Da bevorzugt die Vorrichtung mit einer Fluidisierungsgeschwindigkeit des Gasstromes betrieben wird, welche dem 5-fachen bis 15-fachen der Lockerungsgeschwindigkeit entspricht, ist es hilfreich, eine Größe, wie zum Beispiel die Partikelgröße zu erfassen, sodass man dadurch eine veränderte Lockerungsgeschwindigkeit der Wirbelschicht einfach erkennen kann.

In einer weiteren Ausführungsform der Erfindung weist die Partikelgrößenvorgabevorrichtung eine Partikelgrößenmessvorrichtung auf oder ist mit dieser verbunden. Beispielsweise kann die Partikelgrößenmessvorrichtung mittels Lichtstreuung im oder vor dem Calcinator die Partikelgröße und Partikelgrößenverteilung erfassen. Alternativ können vor oder nach der Reduktionsvorrichtung Proben entnommen und der Partikelgrößenmessvorrichtung zugeführt werden.

In einer weiteren alternativen Ausführungsform der Erfindung ist die Partikelgrößenvorgabevorrichtung eine Eingabevorrichtung, über welche manuell die Informationen vom Anlagenpersonal eingegeben werden können. Weiter alternativ ist die Partikelgrößenvorgabevorrichtung eine Schnittstelle, über die Informationen zur Partikelgrößenverteilung beispielsweise aus einem Analytiklaborsystem übernommen werden können.

In einer weiteren Ausführungsform der Erfindung weist die Reduktionsvorrichtung Leitelemente zur Führung des Materialstroms auf. Beispielsweise können diese im unteren Bereich des Wirbelbettes dazu angeordnet sein, den Weg der größten Partikel zu verlängern und dadurch die Verweilzeit dieser größten Partikel in der Reduktionsvorrichtung zu verlängern.

In einer weiteren Ausführungsform der Erfindung weist die Reduktionsvorrichtung Leitelemente zur Führung des Gasstroms auf. Dieses dient dazu, insbesondere den aus der Wirbelschicht bereits ausgetretenen Gasstrom und die mit dem Gasstrom ausgetragenen feinsten Partikel für eine Mindestzeit in der Reduktionsvorrichtung zu halten und so eine sichere Reduktion und Farboptimierung zu gewährleisten. Dieses kann beispielsweise durch eine Labyrinthführung erfolgen.

In einer weiteren Ausführungsform der Erfindung ist strömungstechnisch hinter dem Gasauslass ein Gassensor angeordnet, welcher ausgebildet ist zur Erfassung der Konzentration eines oder mehrerer Stoffe ausgewählt aus der Liste umfassend Kohlenmonoxid, Kohlendioxid, Wasserstoff, Methan. Diese Stoffe können entweder direkt als Reduktionsmittel eingesetzt werden oder entstehen in der Reduktionsvorrichtung. Daher kann die erfasste Konzentration am Ausgang als Indikator für einen Überschuss an Reduktionsmittel verwendet werden. Die Kohlendioxidkonzentration wird bevorzugt zusammen mit der Kohlenmonoxidkonzentration erfasst, insbesondere um das Verhältnis zu ermitteln.

In einer weiteren Ausführungsform der Erfindung weist die Vorrichtung einen Bypass zwischen Calcinator und Materialkühler zur Umgehung der Reduktionsvorrichtung auf. Dieser Bypass wird bevorzugt ausschließlich für das Anfahren und Abfahren der Vorrichtung verwendet. Über den Bypass kann das aktivierte Material an der Reduktionsvorrichtung direkt in den Materialkühler überführt werden.

In einer weiteren Ausführungsform der Erfindung weist die Reduktionsvorrichtung ein Tauchrohr für die Zuführung von aktiviertem Material auf. Das Tauchrohr reicht hierbei bevorzugt in die Wirbelschicht hinein. Hierdurch wird das aktivierte Material direkt ins Innere der Wirbelschicht eingebracht, sodass sich insbesondere für die feinsten Partikel die Verweilzeit etwas verlängert und so auch für die feinsten Partikel eine Farboptimierung gewährleistet ist.

In einem weiteren Aspekt betrifft die Erfindung ein Verfahren zur Farboptimierung eines aktivierten Materials mit einer erfindungsgemäßen Vorrichtung. Für die Farboptimierung in der Reduktionsvorrichtung wird eine breite Partikelgrößenverteilung ausgewählt, wobei die breite Partikelgrößenverteilung sich dadurch auszeichnet, dass wenigstens 10 Gew.-% der Partikel kleiner als 50 µm und wenigstens 10 Gew.-% der Partikel größer als 250 µm sind. Ein derartiges breites Kornband (Partikelgrößenverteilung) ist ungewöhnlich und für die bisherigen Anlagen nicht zu verarbeiten. Bei bisherigen Anlagen würden die sehr kleinen Partikel schon deaktiviert, bevor die sehr großen Partikel farboptimiert werden. Die Verwendung eines Wirbelschichtreaktors erlaubt aber gerade die Verwendung dieser breiten Partikelgrößenverteilung. Dadurch kann bei der Zerkleinerung beziehungsweise Desagglomeration viel Energie gespart werden und/oder auf einen Größentrennungsschritt verzichtet werden.

In einer weiteren Ausführungsform der Erfindung wird die Partikelgrößenverteilung so ausgewählt, dass alle Partikel kleiner als 2 mm sind.

In einer weiteren Ausführungsform der Erfindung wird die Partikelgrößenverteilung so ausgewählt, dass wenigstens 5 Gew.-% der Partikel größer als 900 µm sind.

In einer weiteren Ausführungsform der Erfindung wird die Partikelgrößenverteilung so ausgewählt, dass wenigstens 5 Gew.-% der Partikel kleiner als 20 µm sind.

In einer weiteren Ausführungsform der Erfindung werden mindestens 10 Gew.-% des Materialstromes aus der Reduktionsvorrichtung über den Gasstrom durch den Gasauslass ausgetragen und in der Gasabreinigungsvorrichtung abgeschieden. Dieses bedeutet, dass die feinste Fraktion mit einer besonders geringen Partikelgröße eben mindestens 10 Gew.-% ausmacht. Dieser Anteil würde nach einem herkömmlichen Verfahren mit hoher Wahrscheinlichkeit in der Reduktionsvorrichtung wieder an Aktivität verlieren. In einem Wirbelschichtreaktor gemäß der Erfindung wird diese Fraktion jedoch über das Fluidisierungsgas sehr schnell ausgetragen, sodass zwar die Farboptimierung, jedoch keine Deaktivierung erfolgt. Durch diesen Effekt der Wirbelschicht erfolgt zugleich eine Abtrennung der Feinstfraktion.

In einer weiteren Ausführungsform der Erfindung wird die Fluidisierungsgeschwindigkeit in der Reduktionsvorrichtung so gewählt, dass die Fluidisierungsgeschwindigkeit dem 5-fachen bis dem 15-fachen der Lockerungsgeschwindigkeit beträgt. Die Lockerungsgeschwindigkeit beziehungsweise der Lockerungspunkt ist die Strömungsgeschwindigkeit des Fluidisierungsgases, bei dem eine Fluidisierung des Materials eintritt, also die theoretisch niedrigste Geschwindigkeit zur Ausbildung der Wirbelschicht. Durch diese höhere Fluidisierungsgeschwindigkeit wird die unterschiedliche Verweilzeit der Partikel in Abhängigkeit der Größe deutlich unterstützt, was bedeutet, dass gerade die feinsten Partikel, welche sehr schnell farboptimiert werden und welche auch entsprechend schnell wieder an Aktivität verlieren würden, eben sehr schnell mit dem Gas auch wieder ausgetragen werden, also nur eine vergleichsweise kurze Verweilzeit aufweisen.

**In** einer weiteren Ausführungsform der Erfindung weist das Fluidisierungsgas in der Reduktionsvorrichtung eine Temperatur von mindestens 700 °C auf. Beispielsweise und insbesondere kann als Gas ein Abgas mit einem Sauerstoffanteil von weniger als 15 Vol.-% verwendet werden. Je geringer der Sauerstoffgehalt und je höher die Temperatur des verwendeten Abgases ist, umso weniger muss dieses weiter erwärmt werden, wodurch weniger Brennstoff (und damit Reduktionsmittel) benötigt wird. Bevorzugt weist das Abgas jedoch einen Sauerstoffanteil von mehr als 0,5 Vol.-% auf, um eine Verbrennung und damit eine Energiefreisetzung zu ermöglichen. Der Vorgang der Farboptimierung, beispielsweise die Reduktion von dreiwertiges Eisen ist endotherm, sodass sich die Temperatur erniedrigen würde. Zusätzlich strahlt die Reduktionsvorrichtung Wärme ab. Insbesondere um diese beiden Effekte in der Reduktionsvorrichtung kompensieren zu können und keine Abkühlung in der Reduktionseinrichtung zuzulassen, weist das Gas eben bevorzugt einen entsprechenden Restsauerstoffgehalt auf.

**In** einer weiteren Ausführungsform der Erfindung wird ein Reduktionsmittel direkt in die Reduktionsvorrichtung eingebracht. Beispielsweise kann Kohle, insbesondere Kohlenstaub, oder Biomasse über eine direkte Zuführung in die Reduktionsvorrichtung eingebracht werden. Hierdurch wird zum einen die reduzierende Atmosphäre direkt in der Wirbelschicht erzeugt, zum anderen wird die Wärme durch eine Verbrennung ebenfalls direkt zur Verfügung gestellt und so eine konstante Temperatur gehalten. Alternativ kann beispielsweise Wasserstoff oder Methan direkt in die Reduktionsvorrichtung eingebracht werden.

**In** einer weiteren Ausführungsform der Erfindung wird ein Reduktionsmittel mit dem Gasstrom in die Reduktionsvorrichtung eingebracht. Hierfür eigenen sich vor allem gasförmige Reduktionsmittel wie Wasserstoff und Methan aber auch flüssige Reduktionsmittel, beispielsweise flüssige Kohlenwasserstoffe.

In einer weiteren Ausführungsform der Erfindung wird ein Reduktionsmittel mit dem Materialstrom in die Reduktionsvorrichtung eingebracht. Dieses ist bevorzugt für feste Reduktionsmittel, wie zum Beispiel Kohle, insbesondere Kohlenstaub. Hier erfolgte eine Vermischung von Reduktionsmittel mit aktiviertem Material bereits vor der Einbringung in die Reduktionsvorrichtung, sodass die reduzierende Atmosphäre für alle Partikel von Anfang an in gleicher Weise gegeben ist.

In einer weiteren Ausführungsform der Erfindung wird bei eisenhaltigen Mineralien, insbesondere Tone, mit einem Fe₂O₃ Gehalt über 20 Gew.-% eine Reduktion wenigstens 80 % des Eisens durchgeführt.

In einer weiteren Ausführungsform der Erfindung wird bei eisenhaltigen Mineralien, insbesondere Tone, mit einem Fe₂O₃ Gehalt zwischen 10 Gew.-% und 20 Gew.-% eine Reduktion von 50 bis 80 % des Eisens durchgeführt. Hierbei wird der Anteil des zu reduzierenden Anteils des Eisens von 50 % bei 10 Gew.-% auf 80 % bei 20 Gew.-% gesteigert. Dieses kann beispielsweise linear oder stufenweise erfolgen.

In einer weiteren Ausführungsform der Erfindung wird bei eisenhaltigen Mineralien, insbesondere Tone mit einem Fe₂O₃ Gehalt unter 10 Gew.-% eine Reduktion von bis zu 50 % des Eisens durchgeführt.

Nachfolgend ist die erfindungsgemäße Vorrichtung anhand eines in den Zeichnungen dargestellten Ausführungsbeispiels näher erläutert.
- Fig. 1: erstes Ausführungsbeispiel
- Fig. 2: zweites Ausführungsbeispiel
- Fig. 3: drittes Ausführungsbeispiel

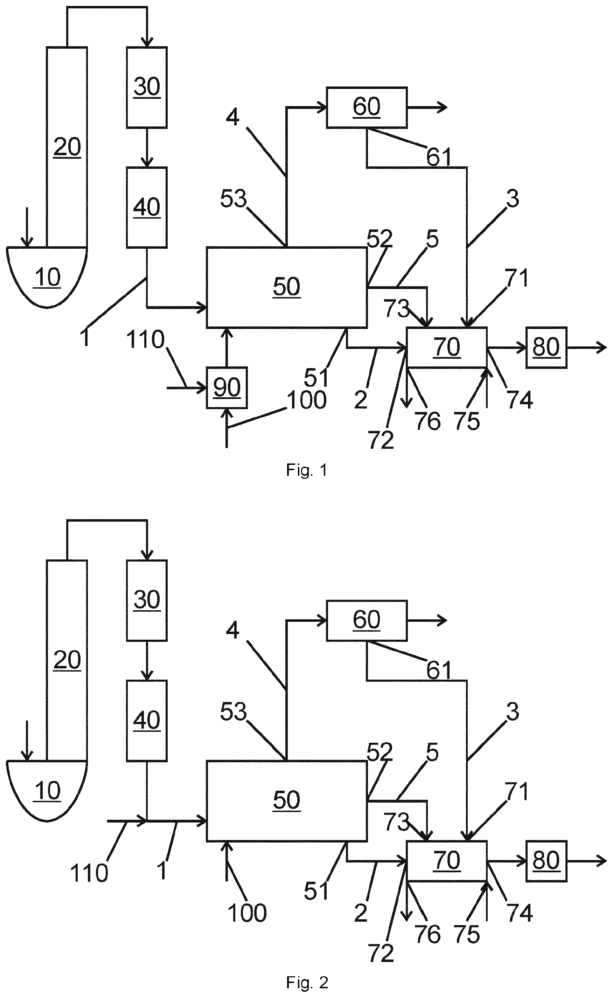

In Fig. 1 ist ein erstes Ausführungsbeispiel einer erfindungsgemäßen Vorrichtung zur Herstellung von farboptimierten aktivierten Material, insbesondere Tonen, dargestellt.

Das Material gelangt zunächst in eine Hammermühle 10 und wird dort desagglomeriert. Hierbei entsteht eine vergleichsweise breite Partikelgrößenverteilung. Das desagglomerierte Material wird anschließend in einem Steigrohrtrockner 20 angehoben und getrocknet. Anschließend gelangt das Material über einen Vorwärmer 30 in einen Calcinator 40 und wird dort thermisch aktiviert. Bei der Aktivierung unter oxidierenden Bedingungen tritt jedoch beispielsweise auch eine Aufoxidation von Eisen zu Fe^{III} auf, sodass sich das Material rötlich verfärbt. Die Aufoxidation erfolgt nicht zwingend quantitativ, es werden also nicht zwingend alle Eisen-Atome auf Fe^{III} aufoxidiert. Um dieses wieder rückgängig zu machen, wird das thermisch aktivierte Material über eine erste Verbindung 1 in einen Wirbelschichtreaktor 50 eingebracht. Zur Fluidisierung der Wirbelschicht wird dem Wirbelschichtreaktor 50 Fluidisierungsgas aus einer Fluidisierungsgaszufuhr 100 über eine Brennkammer 90 zugeführt, wobei der Brennkammer 90 über eine Reduktionsmittelszufuhr 110 beispielsweise Kohlenstaub im Überschuss zum mit dem Fluidisierungsgas zugeführten Sauerstoff zugeführt wird, sodass Kohlenmonoxid in der Brennkammer entsteht. Als Fluidisierungsgas kann beispielsweise ein sauerstoffarmes Abgas aus einem Prozess, beispielsweise vom Vorwärmer 30, oder aber aus dem Abgas nach dem Gasabreinigungsvorrichtung verwendet werden. Der Wirbelschichtreaktor 50 wird beispielsweise derart betrieben, dass die Fluidisierungsgeschwindigkeit dem 5 bis 15-fachen der Lockerungsgeschwindigkeit entspricht. Dadurch werden die feinsten Partikel, welche auch am schnellsten reduzieren und dadurch farboptimiert werden, schnell durch den Gasauslass 53 ausgetragen und gelangen durch den Gasauslass 53 und die daran anschließende vierte Verbindung 4 in die Gasabreinigungsvorrichtung 60, in der diese dann abgeschieden werden. Weiter weist der Wirbelschichtreaktor 50 zwei Ausgänge für das farboptimierte Material aus. Der erste Materialausgang 51 ist an der Unterseite angeordnet und dient zur Entnahme der größten Partikel, der zweite Materialausgang 52 ist im oberen Bereich der Wirbelschicht oder des Wirbelbettes angeordnet und dient zur Entnahme der mittleren Partikelfraktion. Alle drei Fraktionen des farboptimierten Materials werden einem Materialkühler 70 zugeführt. Hierzu ist der Feststoffauslass 61 der Gasabreinigungsvorrichtung 60 über eine dritte Verbindung 3 mit dem ersten Kühlmaterialeinlass 71 verbunden. Der erste Materialausgang 51 ist über eine zweite Verbindung 2 mit dem zweiten Kühlmaterialeinlass 72 verbunden und der zweite Materialausgang 52 ist über eine fünfte Verbindung 5 mit dem dritten Kühlmaterialeinlass 73 verbunden. Kühlgas wird dem Materialkühler 70 über die Kühlgaseinlass75 zugeführt und über den Kühlgasauslass 76 abgeführt. Das gekühlte Produkt kann über den Kühlmaterialauslass 74 entnommen werden. Hierbei ist der erste Kühlmaterialeinlass 71 am nächsten zum Kühlgaseinlass 75 angeordnet, sodass gerade die feinste Fraktion am schnellsten abgekühlt und so am besten vor Reoxidation geschützt wird. Nach der Kühlung erfolgt die Ermittlung der Farbe in der Farberfassungsvorrichtung 80. Hierdurch kann die Zugabe an Reduktionsmittel über die Reduktionsmittelzufuhr 110 so geregelt werden, dass möglichst wenig Reduktionsmittel zugegeben wird, aber dennoch eine ausreichende Entfärbung erzielt wird.

Fig. 2 zeigt ein zweites Ausführungsbeispiel, welches sich von dem ersten in Fig. 1 gezeigtem Ausführungsbeispiel dadurch unterscheidet, dass das Reduktionsmittel vor dem Wirbelschichtreaktor 50 mit dem aktivierten Material vermischt und mit diesem gemeinsam in den Wirbelschichtreaktor 50 eingebracht wird. Beispielsweise wird Kohlenstaub über die Reduktionsmittelszufuhr 110 zugeführt. Dadurch wird auch die Wärmezufuhr direkt in der Wirbelschicht des Wirbelschichtreaktors 50 durch Verbrennung erzeugt. Diese Ausführungsform ist bevorzugt, wenn das durch die Fluidisierungsgaszufuhr 100 zugeführte Fluidisierungsgas schon nahe an (knapp unterhalb) der Zündtemperatur des Reduktionsmittels ist.

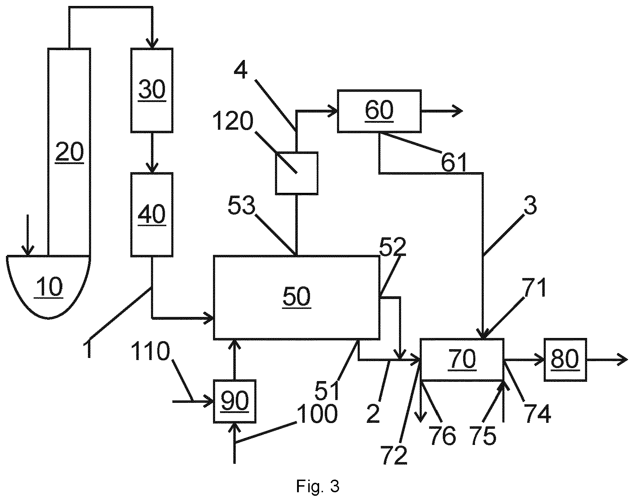

In Fig. 3 ist ein drittes Ausführungsbeispiel gezeigt, welches sich von dem ersten in Fig. 1 gezeigtem Ausführungsbeispiel dadurch unterscheidet, dass die Fraktion aus dem ersten Materialausgang 51 und dem zweiten Materialausgang 52 zunächst zusammen geführt werden und dann gemeinsam dem zweiten Kühlmaterialeinlass 72 zugeführt werden. Hinter dem Gasauslass 53 ist ein Gassensor 120 angeordnet, sodass neben der Farberfassung in der Farberfassungsvorrichtung 80 auch die im Abgas noch vorhandenen reduzierenden Bestandteile als Regelungsgröße verwendet werden können. Beispielsweise kann der Gassensor 120 ein Kohlenmonoxid-Sensor sein. Zusätzlich wird die feinste Materialfraktion aus der Gasabreinigungsvorrichtung 60 separiert. Diese weist oftmals die höchste Reaktivität auf und kann daher für besonders hochwertige Produkte verwendet werden.

### Bezugszeichen

- 1: erste Verbindung
- 2: zweite Verbindung
- 3: dritte Verbindung
- 4: vierte Verbindung
- 5: fünfte Verbindung
- 10: Hammermühle
- 20: Steigrohrtrockner
- 30: Vorwärmer
- 40: Calcinator
- 50: Wirbelschichtreaktor
- 51: erster Materialausgang
- 52: zweiter Materialausgang
- 53: Gasauslass
- 60: Gasabreinigungsvorrichtung
- 61: Feststoffauslass
- 70: Materialkühler
- 71: erster Kühlmaterialeinlass
- 72: zweiter Kühlmaterialeinlass
- 73: dritter Kühlmaterialeinlass
- 74: Kühlmaterialauslass
- 75: Kühlgaseinlass
- 76: Kühlgasauslass
- 80: Farberfassungsvorrichtung
- 90: Brennkammer
- 100: Fluidisierungsgaszufuhr
- 110: Reduktionsmittelszufuhr
- 120: Gassensor

## Patentansprüche

1. Vorrichtung zur thermischen Aktivierung von mineralischen Materialien, wobei die Vorrichtung einen Calcinator (40), eine Reduktionsvorrichtung und einen Materialkühler (70) aufweist, wobei der Calcinator (40) und die Reduktionsvorrichtung über eine erste Verbindung (1) zur Überführung von calciniertem Material miteinander verbunden sind, wobei die Reduktionsvorrichtung mit dem Materialkühler (70) wenigstens über eine zweite Verbindung (2) zur Überführung von farboptimierten Material verbunden ist, **dadurch gekennzeichnet, dass** die Reduktionsvorrichtung ein Wirbelschichtreaktor (50) ist, wobei die Reduktionsvorrichtung einen ersten Materialausgang (51) und einen zweiten Materialausgang (52) aufweist, wobei der erste Materialausgang (51) und der zweite Materialausgang (52) jeweils mit dem Materialkühler (70) zur Überführung von farboptimierten Material miteinander verbunden sind, wobei die Reduktionsvorrichtung einen Gasauslass (53) aufweist, wobei der Gasauslass (53) mit einer Gasabreinigungsvorrichtung (60) über eine vierte Verbindung (4) verbunden ist, wobei die Gasabreinigungsvorrichtung (60) einen Feststoffauslass (61) aufweist, wobei der Materialkühler (70) wenigstens einen ersten Kühlmaterialeinlass (71), einen zweiten Kühlmaterialeinlass (72), einen Kühlmaterialauslass (74), einen Kühlgaseinlass (75) und einen Kühlgasauslass (76) aufweist, wobei der erste Kühlmaterialeinlass (71) strömungstechnisch näher am Kühlgaseinlass (75) als der zweite Kühlmaterialeinlass (72) angeordnet ist, wobei der Feststoffauslass (61) mit dem ersten Kühlmaterialeinlass über eine dritte Verbindung (3) zur Überführung des in der Gasabreinigungsvorrichtung (60) abgeschiedenen Materials verbunden ist, wobei der erste Materialausgang (51) und/oder der zweite Materialausgang (52) mit dem zweiten Kühlmaterialeinlass (72) über die zweite Verbindung (2) zur Überführung von farboptimierten Material verbunden ist.

2. Vorrichtung nach Anspruch 1, **dadurch gekennzeichnet, dass** der Materialkühler (70) einen dritten Kühlmaterialeinlass (73) aufweist, wobei der erste Kühlmaterialeinlass (71) strömungstechnisch näher am Kühlgaseinlass (75) als der dritte Kühlmaterialeinlass (73) angeordnet ist, wobei der zweite Materialausgang (52) mit dem dritten Kühlmaterialeinlass (73) über eine fünfte Verbindung (5) zur Überführung von farboptimierten Material verbunden ist.

3. Vorrichtung nach einem der vorstehenden Ansprüche, **dadurch gekennzeichnet, dass** der erste Materialausgang (51) und der zweite Materialausgang (52) jeweils mit dem zweiten Kühlmaterialeinlass (72) des Materialkühlers (70) verbunden sowie der Feststoffauslass (61) der Gasabreinigungsvorrichtung (60) mit dem ersten Kühlmaterialeinlass (71) des Materialkühlers (70) verbunden sind.

4. Vorrichtung nach einem der vorstehenden Ansprüche, **dadurch gekennzeichnet, dass** die Vorrichtung eine Farberfassungsvorrichtung (80) aufweist, wobei die Farberfassungsvorrichtung (80) zur Erfassung der Farbe des Produkts ausgebildet ist, wobei die Farberfassungsvorrichtung (80) in oder entlang des Produktstromes nach dem Materialkühler (70) angeordnet ist.

5. Vorrichtung nach Anspruch 4, **dadurch gekennzeichnet, dass** die Vorrichtung eine Reduktionsmittelzuführung aufweist, wobei die Reduktionsmittelzuführung mit der Reduktionsvorrichtung zur Zuführung von Reduktionsmittel verbunden ist, wobei die Vorrichtung eine Steuervorrichtung aufweist, wobei die Steuervorrichtung zur Regelung der durch die Reduktionsmittelzuführung zugeführten Menge an Reduktionsmittel ausgebildet ist, wobei die Steuervorrichtung zur Regelung der Menge an Reduktionsmittel in Abhängigkeit von der Farberfassungsvorrichtung (80) erfassten Farbe ausgebildet ist.

6. Vorrichtung nach einem der vorstehenden Ansprüche, **dadurch gekennzeichnet, dass** zwischen der Reduktionsvorrichtung und dem Materialkühler (70) eine gasabschließende Materialschleuse angeordnet ist.

7. Vorrichtung nach einem der vorstehenden Ansprüche, **dadurch gekennzeichnet, dass** die Vorrichtung eine Gaszuführung zur Reduktionsvorrichtung aufweist, wobei die Gaszuführung bezüglich Volumenstrom und Gasgeschwindigkeit regelbar ist, wobei die Vorrichtung eine Steuervorrichtung aufweist, wobei die Steuervorrichtung zur Ansteuerung der Gaszuführung ausgebildet ist, wobei die Steuervorrichtung Volumenstrom und Gasgeschwindigkeit in Abhängigkeit der Partikelgröße des Materials steuert.

8. Vorrichtung nach einem der vorstehenden Ansprüche, **dadurch gekennzeichnet, dass** strömungstechnisch hinter dem Gasauslass (53) ein Gassensor (120) angeordnet ist, wobei der Gassensor (120) ausgebildet ist zur Erfassung der Konzentration eines oder mehrerer Stoffe ausgewählt aus der Liste umfassend Kohlenmonoxid, Kohlendioxid, Wasserstoff, Methan.

9. Verfahren zur Farboptimierung eines aktivierten Materials mit einer Vorrichtung nach einem der vorstehenden Ansprüche, wobei für die Farboptimierung in der Reduktionsvorrichtung eine breite Partikelgrößenverteilung ausgewählt wird, wobei die breite Partikelgrößenverteilung sich dadurch auszeichnet, dass wenigstens 10 Gew.-% der Partikel kleiner als 50 µm und wenigstens 10 Gew.-% der Partikel größer als 250 µm oder wenigstens 5 Gew.-% der Partikel größer als 900 µm sind.

10. Verfahren nach Anspruch 9, **dadurch gekennzeichnet, dass** mindestens 10 Gew.-% des Materialstromes aus der Reduktionsvorrichtung über den Gasstrom durch den Gasauslass (53) ausgetragen und in der Gasabreinigungsvorrichtung (60) abgeschieden werden.

11. Verfahren nach einem der Ansprüche 9 bis 10, **dadurch gekennzeichnet, dass** die Fluidisierungsgeschwindigkeit in der Reduktionsvorrichtung so gewählt wird, dass die Fluidisierungsgeschwindigkeit dem 5-fachen bis dem 15-fachen der Lockerungsgeschwindigkeit beträgt.

12. Verfahren nach einem der Ansprüche 9 bis 11 **dadurch gekennzeichnet, dass** ein Reduktionsmittel direkt in die Reduktionsvorrichtung eingebracht wird.

13. Verfahren nach einem der Ansprüche 9 bis 12, **dadurch gekennzeichnet, dass** ein Reduktionsmittel mit dem Gasstrom in die Reduktionsvorrichtung eingebracht wird.

## Claims

1. A device for the thermal activation of mineral materials, wherein the device comprises a calciner (40), a reduction device and a material cooler (70), wherein the calciner (40) and the reduction device are connected to one another via a first connection (1) for the transfer of calcined material, wherein the reduction device is connected to the material cooler (70) at least via a second connection (2) for the transfer of color-optimized material, **characterized in that** the reduction device is a fluidized bed reactor (50), wherein the reduction device comprises a first material output (51) and a second material output (52), wherein the first material output (51) and the second material output (52) are each connected to one another to the material cooler (70) for the transfer of color-optimized material, wherein the reduction device comprises a gas outlet (53), wherein the gas outlet (53) is connected to a gas purification device (60) via a fourth connection (4), wherein the gas purification device (60) comprises a solids outlet (61), wherein the material cooler (70) comprises at least a first inlet (71) for material to be cooled, a second inlet (72) for material to be cooled, an outlet (74) for cooled material, a cooling gas inlet (75) and a cooling gas outlet (76), wherein the first inlet (71) for material to be cooled is arranged fluidically closer than the second inlet (72) for material to be cooled to the cooling gas inlet (75), wherein the solids outlet (61) is connected to the first inlet for material to be cooled via a third connection (3) for the transfer of the material precipitated in the gas purification device (60), wherein the first material output (51) and/or the second material output (52) is connected to the second inlet (72) for material to be cooled via the second connection (2) for the transfer of color-optimized material.

2. The device as claimed in claim 1, **characterized in that** the material cooler (70) comprises a third inlet (73) for material to be cooled, wherein the first inlet (71) for material to be cooled is arranged fluidically closer than the third inlet (73) for material to be cooled the cooling gas inlet (75), wherein the second material output (52) is connected to the third inlet (73) for material to be cooled via a fifth connection (5) for the transfer of color-optimized material.

3. The device as claimed in one of the preceding claims, **characterized in that** the first material output (51) and the second material output (52) are each connected to the second inlet (72) for material to be cooled of the material cooler (70), and the solids outlet (61) of the gas purification device (60) is connected to the first inlet (71) for material to be cooled of the material cooler (70).

4. The device as claimed in one of the preceding claims, **characterized in that** the device comprises a color recording device (80), wherein the color recording device (80) is configured to record the color of the product, wherein the color recording device (80) is arranged in or along the product flow downstream of the material cooler (70).

5. The device according to claim 4, **characterized in that** the device comprises a reducing agent supply, wherein the reducing agent supply is connected to the reduction device for the delivery of reducing agent, wherein the device comprises a control device, wherein the control device is configured to regulate the amount of reducing agent supplied by the reducing agent supply, wherein the control device is configured to regulate the amount of reducing agent as a function of the color recorded by the color recording device (80).

6. The device as claimed in one of the preceding claims, **characterized in that** a gas-sealing material lock is arranged between the reduction device and the material cooler (70).

7. The device as claimed in one of the preceding claims, **characterized in that** the device comprises a gas supply to the reduction device, wherein the gas supply can be regulated in respect of volume flow rate and gas velocity, wherein the device comprises a control device, wherein the control device is configured to drive the gas supply, wherein the control device controls the volume flow rate and gas velocity as a function of the particle size of the material.

8. The device as claimed in one of the preceding claims, **characterized in that** a gas sensor (120) is arranged fluidically downstream of the gas outlet (53), wherein the gas sensor (120) is configured to record the concentration of one or more substances selected from the list consisting of carbon monoxide, carbon dioxide, hydrogen, methane.

9. A method for the color optimization of activated material with a device as claimed in one of the preceding claims, wherein a wide particle size distribution is selected for the color optimization in the reduction device, the wide particle size distribution being distinguished in that at least 10 wt% of the particles are smaller than 50 µm and at least 10 wt% of the particles are larger than 250 µm or at least 5 wt% of the particles are larger than 900 µm.

10. The method as claimed in claim 9, **characterized in that** at least 10 wt% of the material flow is extracted from the reduction device via the gas flow through the gas outlet (53) and precipitated in the gas purification device (60).

11. The method as claimed in one of claims 9 to 10, **characterized in that** the fluidization velocity in the reduction device is selected so that the fluidization velocity is from 5 times to 15 times the minimum fluidization velocity.

12. The method as claimed in one of claims 9 to 11 **characterized in that** a reducing agent is introduced directly into the reduction device.

13. The method as claimed in one of claims 9 to 12, **characterized in that** a reducing agent is introduced with the gas flow into the reduction device.

## Revendications

1. Un dispositif pour l'activation thermique de matériaux minéraux, dans lequel le dispositif comprend un calcinateur (40), un dispositif de réduction et un refroidisseur de matériau (70), dans lequel le calcinateur (40) et le dispositif de réduction sont reliés l'un à l'autre via une première connexion (1) pour le transfert de matériau calciné, dans lequel le dispositif de réduction est relié au refroidisseur de matériau (70) au moins via une deuxième connexion (2) pour le transfert de matériau optimisé en couleur, **caractérisé en ce que** le dispositif de réduction est un réacteur à lit fluidisé (50), dans lequel le dispositif de réduction comprend une première sortie de matériau (51) et une deuxième sortie de matériau (52), dans lequel la première sortie de matériau (51) et la deuxième sortie de matériau (52) sont chacune reliées l'une à l'autre au refroidisseur de matériau (70) pour le transfert de matériau optimisé en couleur, dans lequel le dispositif de réduction comprend une sortie de gaz (53), dans lequel la sortie de gaz (53) est reliée à un dispositif de purification de gaz (60) via une quatrième connexion (4), dans lequel le dispositif de purification de gaz (60) comprend une sortie de solides (61), dans lequel le refroidisseur de matériau (70) comprend au moins une première entrée (71) pour matériau à refroidir, une deuxième entrée (72) pour matériau à refroidir, une sortie (74) pour matériau refroidi, une entrée de gaz de refroidissement (75) et une sortie de gaz de refroidissement (76), dans lequel la première entrée (71) pour matériau à refroidir est disposée fluidiquement plus près que la deuxième entrée (72) pour matériau à refroidir de l'entrée de gaz de refroidissement (75), dans lequel la sortie de solides (61) est reliée à la première entrée pour matériau à refroidir via une troisième connexion (3) pour le transfert du matériau précipité dans le dispositif de purification de gaz (60), dans lequel la première sortie de matériau (51) et/ou la deuxième sortie de matériau (52) est reliée à la deuxième entrée (72) pour matériau à refroidir via la deuxième connexion (2) pour le transfert de matériau optimisé en couleur.

2. Le dispositif selon la revendication 1, **caractérisé en ce que** le refroidisseur de matériau (70) comprend une troisième entrée (73) pour matériau à refroidir, dans lequel la première entrée (71) pour matériau à refroidir est disposée fluidiquement plus près que la troisième entrée (73) pour matériau à refroidir de l'entrée de gaz de refroidissement (75), dans lequel la deuxième sortie de matériau (52) est reliée à la troisième entrée (73) pour matériau à refroidir via une cinquième connexion (5) pour le transfert de matériau optimisé en couleur.

3. Le dispositif selon l'une des revendications précédentes, **caractérisé en ce que** la première sortie de matériau (51) et la deuxième sortie de matériau (52) sont chacune reliées à la deuxième entrée (72) pour matériau à refroidir du refroidisseur de matériau (70), et la sortie de solides (61) du dispositif de purification de gaz (60) est reliée à la première entrée (71) pour matériau à refroidir du refroidisseur de matériau (70).

4. Le dispositif selon l'une des revendications précédentes, **caractérisé en ce que** le dispositif comprend un dispositif d'enregistrement de couleur (80), dans lequel le dispositif d'enregistrement de couleur (80) est configuré pour enregistrer la couleur du produit, dans lequel le dispositif d'enregistrement de couleur (80) est disposé dans ou le long du flux de produit en aval du refroidisseur de matériau (70).

5. Le dispositif selon la revendication 4, **caractérisé en ce que** le dispositif comprend une alimentation en agent réducteur, dans lequel l'alimentation en agent réducteur est reliée au dispositif de réduction pour la livraison d'agent réducteur, dans lequel le dispositif comprend un dispositif de commande, dans lequel le dispositif de commande est configuré pour réguler la quantité d'agent réducteur fournie par l'alimentation en agent réducteur, dans lequel le dispositif de commande est configuré pour réguler la quantité d'agent réducteur en fonction de la couleur enregistrée par le dispositif d'enregistrement de couleur (80).

6. Le dispositif selon l'une des revendications précédentes, **caractérisé en ce qu'**un sas de matériau étanche aux gaz est disposé entre le dispositif de réduction et le refroidisseur de matériau (70).

7. Le dispositif selon l'une des revendications précédentes, **caractérisé en ce que** le dispositif comprend une alimentation en gaz vers le dispositif de réduction, dans lequel l'alimentation en gaz peut être régulée en ce qui concerne le débit volumique et la vitesse de gaz, dans lequel le dispositif comprend un dispositif de commande, dans lequel le dispositif de commande est configuré pour piloter l'alimentation en gaz, dans lequel le dispositif de commande commande le débit volumique et la vitesse de gaz en fonction de la taille de particule du matériau.

8. Le dispositif selon l'une des revendications précédentes, **caractérisé en ce qu'**un capteur de gaz (120) est disposé fluidiquement en aval de la sortie de gaz (53), dans lequel le capteur de gaz (120) est configuré pour enregistrer la concentration d'une ou plusieurs substances sélectionnées dans la liste constituée de monoxyde de carbone, dioxyde de carbone, hydrogène, méthane.

9. Un procédé pour l'optimisation de la couleur de matériau activé avec un dispositif selon l'une des revendications précédentes, dans lequel une large distribution de taille de particule est sélectionnée pour l'optimisation de la couleur dans le dispositif de réduction, la large distribution de taille de particule étant **caractérisée en ce qu'**au moins 10 wt% des particules sont plus petites que 50 µm et au moins 10 wt% des particules sont plus grandes que 250 µm ou au moins 5 wt% des particules sont plus grandes que 900 µm.

10. Le procédé selon la revendication 9, **caractérisé en ce qu'**au moins 10 wt% du flux de matériau est extrait du dispositif de réduction via le flux de gaz à travers la sortie de gaz (53) et précipité dans le dispositif de purification de gaz (60).

11. Le procédé selon l'une des revendications 9 à 10, **caractérisé en ce que** la vitesse de fluidisation dans le dispositif de réduction est sélectionnée de sorte que la vitesse de fluidisation est de 5 fois à 15 fois la vitesse minimale de fluidisation.

12. Le procédé selon l'une des revendications 9 à 11 **caractérisé en ce qu'**un agent réducteur est introduit directement dans le dispositif de réduction.

13. Le procédé selon l'une des revendications 9 à 12, **caractérisé en ce qu'**un agent réducteur est introduit avec le flux de gaz dans le dispositif de réduction.
